# EUROPÄISCHE PATENTSCHRIFT

(11) **EP 2 248 698 B1**
(45) Veröffentlichungstag und Bekanntmachung des Hinweises auf die Patenterteilung: **16.11.2011**
(21) Anmeldenummer: 10156303.9
(22) Anmeldetag: 12.03.2010
(51) Int. Cl.: B60K 17/28, F16H 47/04

(54) **Antriebsstrang eines Nutzfahrzeugs umfassend ein Stufenlos-Getriebe**
Powertrain for a commercial vehicle comprising an infinitely adjustable gearbox
Conducteur de commande d'un véhicule utilitaire comportant un engrenage en continu

(30) Priorität: 05.05.2009 DE 102009002808
(43) Veröffentlichungstag der Anmeldung: 10.11.2010
(73) Patentinhaber: ZF Friedrichshafen AG, 88038 Friedrichshafen (DE)
(72) Erfinder: Grossmann, Christoph, 94036, Passau (DE); Hirschmann, Frank, 94121, Salzweg (DE); Hüttinger, Karl, 72622, Nürtingen (DE)

(56) Entgegenhaltungen:
- EP-A1- 1 906 055
- WO-A1-2008/142525
- US-A1- 2006 150 757
- US-A1- 2007 158 129
- US-B1- 6 250 414

## Beschreibung

Die Erfindung betrifft den Antriebsstrang eines Nutzfahrzeugs umfassend ein Stufenlos-Getriebe gemäß dem Oberbegriff des Patentanspruchs 1.

Aus dem EP 1 855 029 sind diese Merkmale bekannt.

Nutzfahrzeuge, die im Kommunal- und Installationsbetrieb eingesetzt werden, benötigen zum Betrieb ähnlich wie Ackerschlepper mechanische Schnittstellen für den Antrieb von Nebenaggregaten und Arbeitsgeräten. Aus dem Stand der Technik ist bekannt, bei derartigen Nutzfahrzeugen Nebenabtriebe vorzusehen, die am Fahrgetriebe oder am Motor angeordnet sind. Die Nebenabtriebe sind jedoch spezifisch für die jeweilige Aufgabe, beispielsweise für Feuerwehrpumpenantrieb, Müllabfuhrantrieb oder Drehleiterantrieb ausgelegt, ausgeführt und angeordnet, so dass in nachteiliger Weise ein Anschluss verschiedener Aggregate an derselben Schnittstelle im Allgemeinen nicht möglich ist.

Ein weiterer Nachteil der Nebenabtriebsauslegung bei derartigen Nutzfahrzeugen nach dem Stand der Technik besteht darin, dass der Anbau der Nebenaggregate in der Regel durch eine nicht integrierte, exponierte Anordnung erfolgt, was hinsichtlich des zur Verfügung stehenden Bauraumes zu Problemen führen kann.

Aus der DE 10 2006 057 836 A1 geht ein Antriebsstrang eines universellen allradgetriebenen Kleinlastkraftwagens und Geräteträgers für die Landwirtschaft und für kommunale Aufgaben hervor, bei dem eine mechanisch-hydrostatische Leistungsverzweigung beinhaltende Baueinheit einer Ackerschlepper-Stufenlosgetriebeeinheit mit einem Adaptionsgetriebe kombiniert wird, so dass eine hohe Fahrgeschwindigkeit erreicht wird. Bei dem bekannten Antriebsstrang ist ein Längsverteilergetriebe vorgesehen, mittels dessen die Antriebsleistung auf zumindest zwei Achsen verteilt wird.

Ferner ist aus dem Stand der Technik bekannt, dass Ackerschlepper optional separate PTO-Getriebe mit mehreren Gängen und einem genormten Wellenende aufweisen können, die als universelle Schnittstelle für verschiedene mechanisch angetriebene Geräte benutzt werden können.

Der vorliegenden Erfindung liegt die Aufgabe zugrunde, einen Antriebsstrang eines Nutzfahrzeugs, umfassend ein Stufenlos-Getriebe und ein PTO-Getriebe (Nebenabtriebsgetriebe) anzugeben, welcher Anschlussmöglichkeiten für verschiedene Aggregate zur Verfügung stellt.

Diese Aufgabe wird durch die Merkmale des Patentanspruchs 1 gelöst. Weitere erfindungsgemäße Ausgestaltungen und Vorteile gehen aus dem Unteranspruch hervor.

Demnach wird ein Antriebsstrang eines Nutzfahrzeugs, umfassend ein Stufenlos-Getriebe und ein PTO-Getriebe vorgeschlagen, bei dem in das Stufenlos-Getriebe ein PTO -Stirnradgetriebe integriert ist. Vorzugsweise ist das PTO-Getriebe über einen Durchtrieb direkt mit dem Verbrennungsmotor verbunden und weist gemäß der Erfindung einen standardisierten Pumpenanschluss und/oder einem Gelenkwellenanschluss auf, so dass zumindest eine Abtriebsmöglichkeit zur Verfügung steht.

Gemäß der Erfindung können über den Gelenkwellenanschluss verschiedene Nebenaggregate betrieben werden, beispielsweise eine Leistungshydraulik oder ein separates Heckzapfwellengetriebe.

Durch die erfindungsgemäße Konzeption wird eine sehr kompakte Einheit geschaffen, welche keinen zusätzlichen axialen Bauraum benötigt.

Ferner gemäß Erfindung, ist der Fahrgetriebeabtrieb über zumindest eine Stirnradstufe einer Stirnradkette parallel versetzt, wobei die Antriebsleistung über eine mit der Stirnradstufe verbundene Verlagerungswelle axial betrachtet nach vorne übertragen wird, wodurch am hinteren Ende des Fahrgetriebes ein freier Bauraum zur Verfügung gestellt wird, der für den Anbau der PTO-Anschlüsse genutzt werden kann.

Gemäß Erfindung sind die Stirnradketten des PTO-Getriebes und der Abtriebskette Platz sparend auf gleicher axialer Position entlang der Fahrtrichtungsachse angeordnet.

Die Erfindung wird im Folgenden anhand der beigefügten Figuren beispielhaft näher erläutert. Es zeigen:
- Figur 1:: Eine schematische Ansicht einer bevorzugten Ausführungsform eines erfindungsgemäßen Antriebsstrangs eines Nutzfahrzeugs; und
- Figur 2:: Eine schematische Ansicht eines Teiles einer zweiten bevorzugten Ausführungsform eines erfindungsgemäßen Mehrstufengetriebes, bei der die das PTO-Getriebe mit dem Verbrennungsmotor ver- bindende Schaltkupplung als Lastschaltkupplung ausgeführt ist.

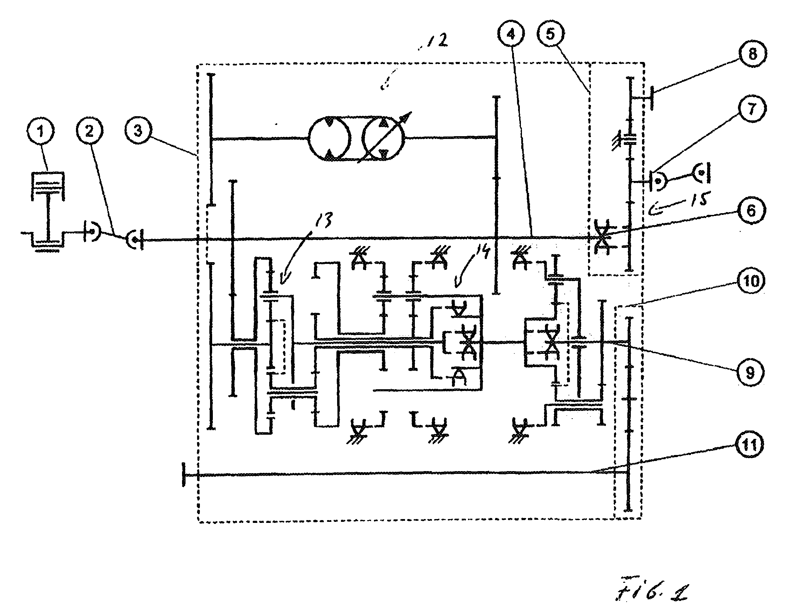

Der in Figur 1 gezeigte Antriebsstrang eines Nutzfahrzeuges umfasst einen Verbrennungsmotor 1, welcher über eine Gelenkwelle 2 ein Stufenlos-Fahrgetriebe 3 (CVT-Getriebe) antreibt, dessen Abtrieb 9 axial betrachtet nach hinten verschoben ausgeführt ist.

Bei dem gezeigten Beispiel ist das Stufenlos - Fahrgetriebe 3 als stufenloses hydrostatisch-mechanisches Leistungsverzweigungsgetriebe ausgeführt, welches nach dem Stand der Technik ein stufenlos verstellbares Hydrostatgetriebe 12 mit einer volumenverstellbaren und einer volumenkonstanten Einheit, ein Summierungsgetriebe 13 und ein Bereichsgetriebe 14 mit mehreren schaltbaren Gängen aufweist. Die über die Gelenkwelle 2 eingeleitete Leistung verzweigt sich zum einen zu dem Hydrostatgetriebe 12 und zum anderen auf eine Eingangswelle des Summierungsgetriebes 13.

Durch das Summierungsgetriebe 13 werden die Drehzahlen und Drehmomente des Hydrostatgetriebes 12 und des Verbrennungsmotors 1 zusammengeführt, wobei mit Hilfe von Schaltelementen verschiedene Gänge anwählbar sind, indem die Ausgangswelle des Summierungsgetriebes 13 über unterschiedliche Übersetzungsstufen mit dem Fahrgetriebeabtrieb 9 gekoppelt wird.

Wie aus Figur 1 ersichtlich, ist der Abtrieb 9 des Stufenlos-Getriebes 3 über eine Stirnradkette 10 parallel versetzt, wobei die Antriebsleistung über eine mit der Stirnradkette 10 verbundene Verlagerungswelle 11 in Vorwärtsfahrtrichtung nach vorne übertragen wird. Dadurch wird hinter dem Stufenlos-Getriebe 3 Bauraum zum Anschluss von Nebenaggregaten zur Verfügung gestellt.

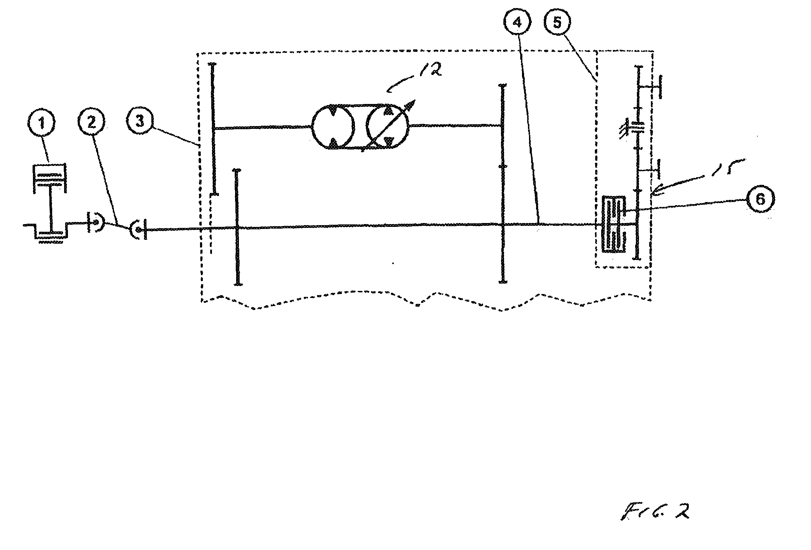

Bei dem gezeigten Beispiel wird Antriebsleistung des Verbrennungsmotors über einen Motordurchtrieb 4 zu einem integrierten PTO-Getriebe 5, umfassend eine Stirnradkette 15 übertragen, wobei das PTO - Getriebe 5 optional eine formschlüssige, reibschlüssige oder gemäß Figur 2 eine als Lastschaltkupplung ausgeführte Schaltkupplung 6 aufweisen kann, welche das PTO-Getriebe 5 mit dem Verbrennungsmotor 1 lösbar verbindet.

Ferner weist das PTO-Getriebe 5 einen Gelenkwellenanschluss 7 und/oder einen standardisierten Pumpenanschluss 8 auf. Zudem ist die Stirnradkette 15 des PTO-Getriebes 5 axial betrachtet auf gleicher Position wie die dem Abtrieb 9 des Stufenlos-Getriebes 3 zugeordnete Stirnradkette 10 angeordnet.

### Bezugszeichen

- 1: Verbrennungsmotor
- 2: Gelenkwelle
- 3: Stufenlos - Fahrgetriebe
- 4: Motordurchtrieb
- 5: PTO-Getriebe
- 6: Schaltkupplung
- 7: Gelenkwellenanschluss
- 8: Pumpenanschluss
- 9: Fahrgetriebeabtrieb
- 10: Stirnradkette
- 11: Verlagerungswelle
- 12: Hydrostatgetriebe
- 13: Summierungsgetriebe
- 14: Bereichsgetriebe
- 15: Stirnradkette

## Patentansprüche

1. Antriebsstrang eines Nutzfahrzeugs, umfassend ein Stufenlos-Getriebe (3) und ein PTO-Getriebe (5), wobei das PTO-Getriebe (5) als Stirnrad-Getriebe ausgeführt ist und in das Stufenlos-Getriebe (3) integriert ist, wobei das PTO-Getriebe (5) einen Gelenkwellenanschluss (7) und/oder einen standardisierten Pumpenanschluss (8) aufweist, wobei die Antriebsleistung des Verbrennungsmotors über einen Motordurchtrieb (4) zu dem integrierten PTO-Getriebe (5) übertragen wird, wobei das Stufenlos-Getriebe (3) als stufenloses hydrostatisch-mechanisches Leistungsverzweigungsgetriebe ausgeführt ist, welches ein stufenlos verstellbares Hydrostatgetriebe (12) mit einer volumenverstellbaren und einer volumenkonstanten Einheit, ein Summierungsgetriebe (13) und ein Bereichsgetriebe (14) mit mehreren schaltbaren Gängen aufweist, **dadurch gekennzeichnet, daß** der Abtrieb (9) des Stufenlos-Getriebes (3) über eine Stirnradkette (10) parallel versetzt ist, wobei die Antriebsleistung über eine mit der Stirnradkette (10) verbundene Verlagerungswelle (11) in Vorwärtsfahrtrichtung nach vorne übertragen wird, wodurch hinter dem Stufenlos-Getriebe (3) Bauraum zum Anschluss von Nebenaggregaten zur Verfügung gestellt wird wobei die Stirnradkette (15) des PTO-Getriebes (5) axial betrachtet auf gleicher Position wie die dem Abtrieb (9) des Stufenlos-Getriebes (3) zugeordnete Stirnradkette (10) angeordnet ist.

2. Antriebsstrang eines Nutzfahrzeugs, nach Anspruch 1, **dadurch gekennzeichnet, dass** das PTO-Getriebe (5) optional eine formschlüssige, reibschlüssige oder eine als Lastschaltkupplung ausgeführte Schaltkupplung (6) aufweist, welche das PTO-Getriebe (5) mit dem Verbrennungsmotor (1) lösbar verbindet.

## Claims

1. Drivetrain of a commercial vehicle, comprising a continuously variable transmission (3) and a PTO transmission (5), the PTO transmission (5) being configured as a spur gear mechanism and being integrated into the continuously variable transmission (3), the PTO transmission (5) having an articulated-shaft connection (7) and/or a standardized pump connection (8), the drive power of the internal combustion engine being transmitted via an engine through drive (4) to the integrated PTO transmission (5), the continuously variable transmission (3) being configured as an infinitely variable hydrostatic/mechanical power branching transmission which has an infinitely adjustable hydrostatic transmission (12) with an adjustable-volume and a constant-volume unit, a summing transmission (13) and a range transmission (14) with a plurality of shiftable gears, **characterized in that** the output (9) of the continuously variable transmission (3) is offset in parallel via a spur gear chain (10), the drive power being transmitted to the front in the forward driving direction via a displacement shaft (11) which is connected to the spur gear chain (10), as a result of which installation space for connecting ancillary units is provided behind the continuously variable transmission (3), the spur gear chain (15) of the PTO transmission (5) being arranged at the same position, as viewed axially, as the spur gear chain (10) which is assigned to the output (9) of the continuously variable transmission (3).

2. Drivetrain of a commercial vehicle according to Claim 1, **characterized in that** the PTO transmission (5) optionally has a clutch (6) which is positively locking, frictional or is configured as a power-shift clutch, and which connects the PTO transmission (5) releasably to the internal combustion engine (1).

## Revendications

1. Chaîne cinématique d'un véhicule utilitaire, comprenant une transmission à variation continue (3) et une transmission à prise de force (5), la transmission à prise de force (5) étant réalisée sous forme de transmission à pignons droits et étant intégrée dans la transmission à variation continue (3), la transmission à prise de force (5) présentant un raccord d'arbre de transmission (7) et/ou un raccord de pompe standardisé (8), la puissance d'entraînement du moteur à combustion interne étant transmise par le biais d'une prise directe du moteur (4) à la transmission à prise de force (5) intégrée, la transmission à variation continue (3) étant réalisée sous forme de transmission à répartition de puissance hydrostatique-mécanique à variation continue, qui présente un engrenage hydrostatique (12) à variation continue avec une unité à volume réglable et une unité à volume constant, un engrenage combineur (13) et une boîte relais (14) avec plusieurs rapports commutables, **caractérisée en ce que** la sortie (9) de la transmission à variation continue (3) est mise en parallèle par le biais d'une chaîne à pignons droits (10), la puissance d'entraînement étant transmise vers l'avant dans la direction de marche avant par le biais d'un arbre de déplacement (11) connecté à la chaîne à pignons droits (10), de sorte qu'un espace de construction soit disponible derrière la transmission à variation continue (3) pour le raccordement de groupes auxiliaires, la chaîne à pignons droits (15) de la transmission à prise de force (5), considérée axialement, étant disposée dans la même position que la chaîne à pignons droits (10) associée à la prise de force (9) de la transmission à variation continue (3).

2. Chaîne cinématique d'un véhicule utilitaire selon la revendication 1, **caractérisée en ce que** la transmission à prise de force (5) présente en option un embrayage (6) à engagement positif, à engagement par friction ou réalisé sous forme d'un embrayage à changement de rapports sous charge, qui relie de manière amovible la transmission à prise de force (5) au moteur à combustion interne (1).
